**Europäisches Patentamt**

**European Patent Office**

**Office européen des brevets**

(19)

(11) Veröffentlichungsnummer: **0 071 159**

**A1**

(12) # EUROPÄISCHE PATENTANMELDUNG

(21) Anmeldenummer: **82106545.5**

(51) Int. Cl.³: **B 29 F 3/02**

(22) Anmeldetag: **20.07.82**

(30) Priorität: 31.07.81 DE 3130417
11.09.81 DE 3136074

(43) Veröffentlichungstag der Anmeldung:
09.02.83 Patentblatt 83/6

(84) Benannte Vertragsstaaten:
CH DE FR GB IT LI

(71) Anmelder: **Windmöller & Hölscher**
**Münsterstrasse 48-52**
**D-4540 Lengerich i.W.(DE)**

(72) Erfinder: **Upmeier, Hartmut**
**Jahnstrasse 25**
**D-4540 Lengerich(DE)**

(72) Erfinder: **Schreiber, Thilo**
**Am Schnaat 6**
**D-4540 Lengerich(DE)**

(74) Vertreter: **Lorenz, Eduard et al,**
**Rechtsanwälte Lorenz, Eduard - Seidler, Bernhard**
**Seidler, Margrit - Gossel, Hans-K. Philipps, Ina, Dr.**
**Widenmayerstrasse 23**
**D-8000 München 22(DE)**

(54) **Trichterstück einer Einschneckenstrangpresse.**

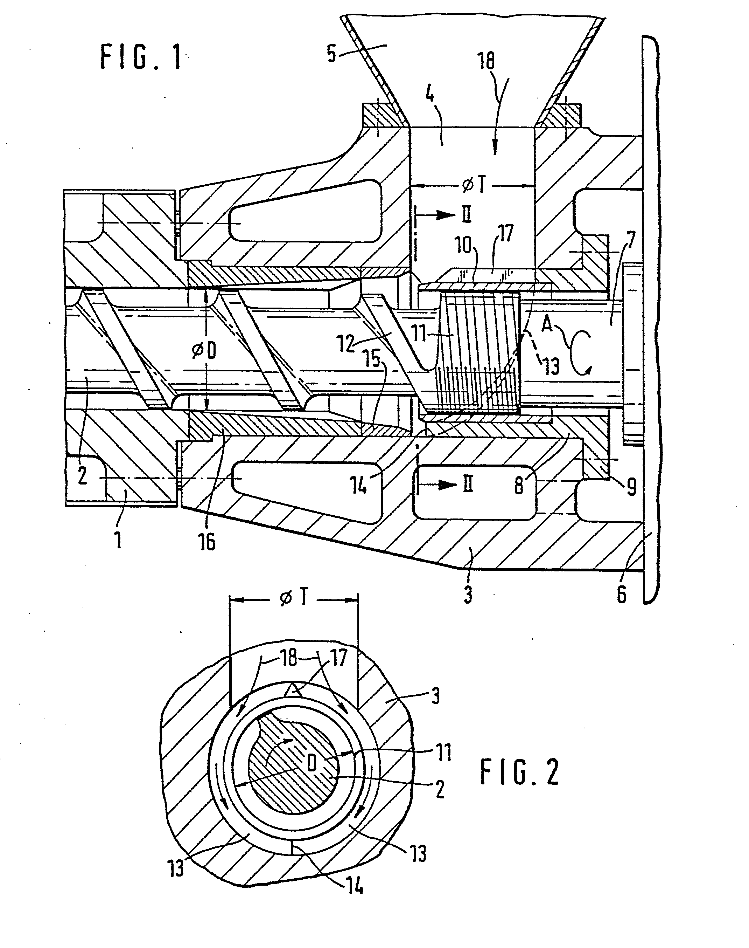

(57) Ein Trichterstück einer Einschneckenstrangpresse ist mit einer in einem Gehäuse (1, 3) gelagerten Förderschnecke (2) versehen, die zur antreibenden Getriebewelle hin durch ein von einer gehäusefesten Buchse (10, 20) abgedecktes Rückfördergewinde (11) abgedichtet ist. Radial zur Förderschnecke (2) ist in dem Gehäuse (3) eine Einfüllöffnung (4) angeordnet. Durch einen zwischen dem Hüllzylinder der Förderschnecke (2) und der Gehäusebohrung befindlichen Ringraum ist eine in Förderrichtung an die Einfüllöffnung (4) anschließende Einzugstasche (15) gebildet. Um die je Drehung der Förderschnecke (2) auftretenden Drehmoment- bzw. Druckschwankungen in den geförderten thermoplastischen Massen zu verbinden, durchsetzt die das Rückfördergewinde (11) abdeckende Buchse (10, 20) die Einfüllöffnung (4) zumindest teilweise. Weiterhin ist ein die Buchse (10, 20) umgebender ringförmiger Einzugsraum (21) vorgesehen, der auf seiner Rückseite durch eine elliptische oder geneigte Leitflächen (13, 19) bildende Stirnfläche geschlossen ist, deren oberer Scheitel oder oberer Bereich sich im Bereich der oberen Mantellinie der Buchse (10, 20) an der hinteren Seite der Einfüllöffnung (4) befindet und deren unterer Scheitel oder unterer Bereich im Bereich der unteren Mantellinie der Buchse (10, 20) liegt (Fig. 1).

FIG. 1

33 954 **0071159** G-die

17. Mai 1982

Windmöller & Hölscher,
4540 Lengerich

---

### Trichterstück einer Einschneckenstrangpresse

---

Die Erfindung betrifft ein Trichterstück einer Einschneckenstrangpresse mit einer in einem Gehäuse gelagerten Förderschnecke, die zur antreibenden Getriebewelle hin durch ein
von einer gehäusefesten Buchse abgedecktes Rückfördergewinde
abgedichtet ist, mit einer radial zur Förderschnecke angeordneten Einfüllöffnung in dem Gehäuse und einer durch
einen zwischen dem Hüllzylinder der Förderschnecke und der
Gehäusebohrung befindlichen Ringraum gebildeten, in Förderrichtung an die Einfüllöffnung anschließenden Einzugstasche.

Im Regelfall sind die Förderschnecken von Strangpressen zur Verarbeitung von thermoplastischen Massen horizontal angeordnet, wobei die thermoplastischen Massen in Form eines Granulats oder Pulvers über eine radiale und das Förderschneckengehäuse vertikal durchsetzende Zuführungsbohrung aus dem aufgesetzten Vorratstrichter zugeführt werden. Diese seitliche Zuführung des Granulats oder Pulvers bedingt eine Umlenkung des thermoplastischen Rohstoffs um 90° in Richtung der Schneckenachse. Untersuchungen haben ergeben, daß diese Umlenkung Rückwirkungen auf die Förderkonstanz der Extruderschnecke hat, die durch den Druck des Granulat- bzw. Pulvergewichts und den Einzug der Massen durch den die Einfüllöffnung überstreichenden Fördergang verursacht werden und sich in Drehmoment- bzw. Druckspitzen in den eingezogenen Massen pro Umdrehung der Förderschnecke äußern. Diese Druckspitzen pflanzen sich bis in den extrudierten Strang fort und beeinträchtigen die Toleranzhaltigkeit des Fertigprodukts. Besonders nachteilig wirkt sich diese Toleranzbeeinflussung bei der Herstellung von Folien nach dem Folienblasverfahren aus.

Frühere Entwicklungen von Extrudern wiesen in dem Einzugsbereich der Förderschnecke eine glatte Bohrung in dem Förder- schneckengehäuse mit Schneckennenndurchmesser auf. Durch eine besondere Gestaltung der abschließenden Kante der Einfüllöffnung zur Zylinderbohrung wurde versucht, Förder- und Druckschwankungen zu vermindern.

Seit einigen Jahren ist es bekannt, die Einzugszone im Trichterbereich des zylindrischen Extrudergehäuses mit einer sogenannten Nutbüchse auszustatten, in der auf einer bestimmten Länge konisch auslaufende, achsparallele Nuten in der Bohrung des Gehäuses das Mitdrehen des Granulats unterbinden und dadurch die Ausstoßleistung der Strangpresse erhöhen sollen. Durch diese Nuten wurden jedoch die oben beschriebenen Drehmoment- bzw. Druckspitzen verstärkt, was durch Anordnung einer radialen Einzugstasche vor der eigentlichen Nutbüchse gemildert werden konnte.

Die Bohrung dieser radialen Einzugstaschen, die eine axiale Länge bis zu einem Schneckendurchmesser aufweisen können, weist gegenüber dem Außendurchmesser der Förderschnecke einen radialen Abstand auf, der größer ist als die größte Körnung des zu verarbeitenden Granulats. Bei bekannten Strangpressen mündet jedoch die Zuführungsbohrung rechtwinkelig zur Achse der Förderschnecke in die radiale Einzugstasche, so daß der Granulat- oder Pulverstrom durch den Einzug in die Förderschnecke um 90° umgelenkt wird. Durch diese Art des Einzugs treten Drehmoment- bzw. Druckschwankungen in den thermoplastischen Massen in einer Größenordnung von +/- 2% auf, die entsprechend die Längstoleranzen des Strangproduktes beeinflussen und sich nachteilig bemerkbar machen.

Aufgabe der Erfindung ist es daher, ein Trichterstück für Schneckenstrangpressen zu schaffen, das eine Drehmoment- bzw. Druckschwankungen zumindest vermindernde Aufgabe der thermoplastischen Massen gestattet.

Erfindungsgemäß wird diese Aufgabe bei einem Trichterstück der eingang angegebenen Art dadurch gelöst, daß die das Rückfördergewinde abdeckende Buchse die Einfüllöffnung zumindest teilweise durchsetzt und ein die Buchse umgebender ringförmiger Einzugsraum vorgesehen ist, der auf seiner Rückseite durch eine elliptische, Leitflächen bildende Stirnfläche geschlossen ist, deren oberer Scheitel sich im Bereich der oberen Mantellinie der Buchse an der hinteren Seite der Einfüllöffnung befindet und deren unterer Scheitel im Bereich der
unteren Mantellinie der Buchse liegt. Durch die erfindungsgemäße Ausbildung des Trichterstücks wird eine Einzugszone
geschaffen, die die seitlich zugeführten thermoplastischen
Massen mit entsprechendem hydrostatischem Druck in definierter
Weise in einen axial wirkenden hydrostatischen Granulat- bzw.
Pulverdruck umlenkt. Die erfindungsgemäße Umlenkeinrichtung
stellt sicher, daß eine Brückenbildung im Granulat- bzw.
Pulverstrom unterbunden und ein konstantes Einzugsverhalten
und damit auch eine konstante Ausstoßleistung erreicht wird.

Die Umlenkung eines Schmelzestroms aus thermoplastischem
Material um etwa 90° mit Hilfe eines mit Leitflächen versehenen Umlenkelements und eines den Schmelzestrom teilenden
sogenannten Herzstücks ist bereits bei Extrudermundstücken
zur Ummantelung von Kabeln oder dergleichen bekannt.

Nach einer besonders bevorzugten Ausführungsform wird eine
weitere Verminderung der Drehmomentspitzen bzw. Druckspitzen
in den eingezogenen thermoplastischen Massen je Umdrehung
der Förderschnecke dadurch erreicht, daß der Schneckenschaft
im Bereich der Einfüllöffnung keinen Schneckensteg trägt.
Bei dieser erfindungsgemäßen Ausgestaltung des Trichterstücks
ist der Einzugsraum für das Granulat bzw. die thermoplastischen
Massen durch Wegfall des der Förderung dienenden Schneckenstegs vergrößert. Der Einzug der thermoplastischen Massen
in den fördernden Schneckensteg erfolgt daher gleichmäßiger.
Durch den Wegfall des Schneckenstegs im Bereich der Einfüllöffnung ergeben sich auch fertigungstechnische Vorteile.

In weiterer Ausgestaltung der Erfindung ist vorgesehen, daß
die Einzugstasche durch die an die Einfüllöffnung anschließende Bohrung des Trichterstücks gebildet ist und der Durchmesser
der Bohrung um mehr als die doppelte Korngröße des größten
zu verarbeitenden Granulats größer ist als der Außendurchmesser
der Förderschnecke. Durch diese Vergrößerung des Außendurchmessers der Einzugstasche kann das Granulat dem fördernden
Schneckengang zur Vermeidung von Druckspitzen ausweichen.

Durch die beschriebenen Maßnahmen wird die Fördermenge pro
Umdrehung der Förderschnecke etwas gegenüber der ersten Ausführung nach der Erfindung reduziert. Hierdurch werden jedoch
nicht nur die Druck- und Drehmomentschwankungen weiter vergleichmäßigt, sondern bei der Verarbeitung von hochpigmentierten Granulaten wird auch der Verschleiß der Schnecke herabgesetzt.

Mit den vorstehend beschriebenen Ausführungsformen wird bei
einem konstanten Förderverhalten der Förderschnecke eine wesentliche Vergleichmäßigung des Drehmoments erreicht, weil durch
die Umlenkung des zugeführten Kunststoffgranulats in Förderrichtung der Schnecke und damit einer vergleichmäßigten Einspeisung und durch den kontinuierlichen Einzug des Kunststoffmaterials über den Bereich der Einzugstasche druckerhöhende
periodische Förderstöße auf den geförderten Kunststoffstrang
vermieden werden. Diese Vergleichmäßigung des Förderverhaltens
und des Drehmomentverlaufs hat jedoch eine Verringerung des
Fördergrads (Ausstoß pro Schneckenumdrehung) zur Folge. Diese
geringere Förderleistung läßt sich auch nicht durch eine
höhere Schneckendrehzahl ausgleichen, weil diese eine unerwünschte Erwärmung der thermoplastischen Schmelze bewirken
würde.

Um trotz der mit dem erfindungsgemäßen Trichterstück erreichten
Vergleichmäßigung der Förderung und des Drehmomentverlaufs

- 6 -

einen verbesserten Fördergrad, also eine höhere Leistung ohne
Erhöhung der Schneckendrehzahl zu erreichen, ist nach einer
erfinderischen Weiterbildung vorgesehen, daß die die Nuten der
Nutbüchse trennenden Stege entgegen der Förderrichtung bis in
die Einzugstasche ragen und in Draufsicht eine sägezahnartige
Form aufweisen. Die dem eingespeisten Granulat zugewandten
Flanken der sägezahnartigen Enden der Stege der Nutbüchse bilden
Stützflanken, die im Bereich der Einzugstasche ein zu starkes
Ausweichen des eingespeisten Materials verhindern und dadurch
den Fördergrad wesentlich verbessern. Trotz der Erhöhung der
Ausstoßleistung pro Umdrehung der Schnecke wird bei dieser
Ausgestaltung die stoßfreie Zuführung des Granulat- bzw. Pulverstroms bei ruhigem, gleichmäßigem Drehmomentverlauf beibehalten.

Zweckmäßigerweise sind nur die in Drehrichtung hinteren Flanken
der Stege zur Bildung der keilförmig erweiterten Einlaufbereiche
der Nuten relativ zur Schneckenachse abgeschrägt, so daß der
Einlaufbereich in die Nuten keilförmig erweitert ist und die
Stützflanken der Stege eine günstige Stellung zum aufgegebenen
Gutstrom haben.

Gleichzeitig wird zweckmäßigerweise die Anzahl der Nuten erhöht.
Diese sollten etwa der Zahl entsprechen, die der Millimeterzahl
entspricht, die sich aus der Division des Schneckendurchmessers
(in Millimetern) durch 5 ergibt.

Die vorstehend beschriebenen Ausführungsformen des erfindungsgemäßen Trichterstücks führen bereits zu einer wesentlichen
Glättung der sich periodisch je Umdrehung der Förderschnecke
einstellenden Förderstöße. Nach einer weiteren erfinderischen
Ausgestaltung läßt sich eine weitere Glättung und Vergleichmäßigung des Förderverhaltens und des Drehmomentverlaufs dadurch
erreichen, daß die Förderschnecke mit mindestens drei im Bereich
der Einfüllöffnung beginnenden Schneckenstegen versehen ist, von
denen nur einer über die Nutbüchse hinaus fortgeführt ist. Da
das aufgegebene Kunststoffgranulat von mehreren Schneckenstegen
eingezogen wird, entstehen je Schneckensteg bei jeder Drehung
der Förderschnecke Förderstöße entsprechend kleinerer Amplitude
und höherer Frequenz, die durch die weiteren erfindungsgemäßen
Maßnahmen geglättet werden. Da bei dem Einzug des Kunststoffmaterials durch eine mehrgängige Schnecke der erfindungsgemäßen
Art höherfrequente Druck- und Förderstöße geringerer Amplitude
entstehen, die an sich schon weniger störend sind als die periodischen Förderstöße je Umdrehung der Förderschnecke mit größerer
Amplitude, läßt sich eine weitere Vergleichmäßigung des Förderverhaltens erreichen.

Zweckmäßigerweise ist die Förderschnecke über den gesamten Bereich
der Nutbüchse bis zu der glattwandigen zylindrischen Gehäusebohrung hin mehrgängig ausgebildet.

Weitere vorteilhafte Ausgestaltungen der Erfindung sind in den
Unteransprüchen beschrieben worden.

Ausführungsbeispiele der Erfindung werden nachstehend anhand der
Zeichnung näher erläutert. In dieser zeigt

Fig. 1     einen vertikalen Längsschnitt durch das Trichterstück einer Einschneckenstrangpresse,

Fig. 2    einen Schnitt durch das Trichterstück nach
          Fig. 1 längs der Linie II - II,

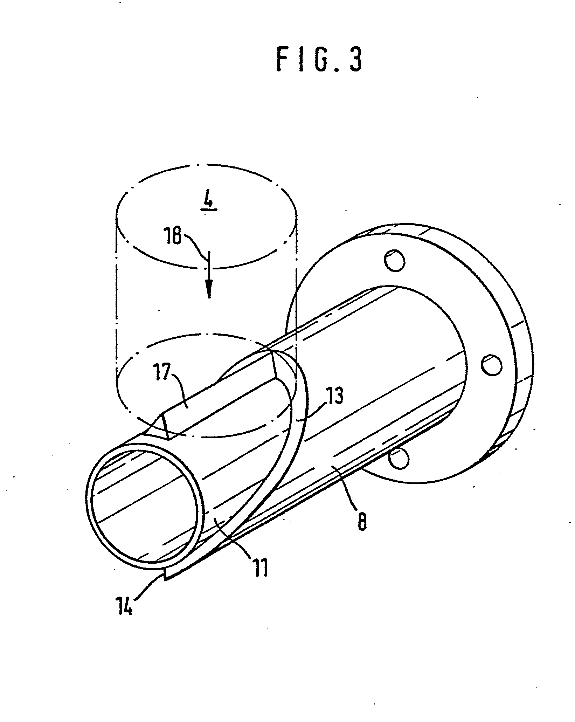

Fig. 3    eine perspektivische Ansicht des Umlenkstücks,

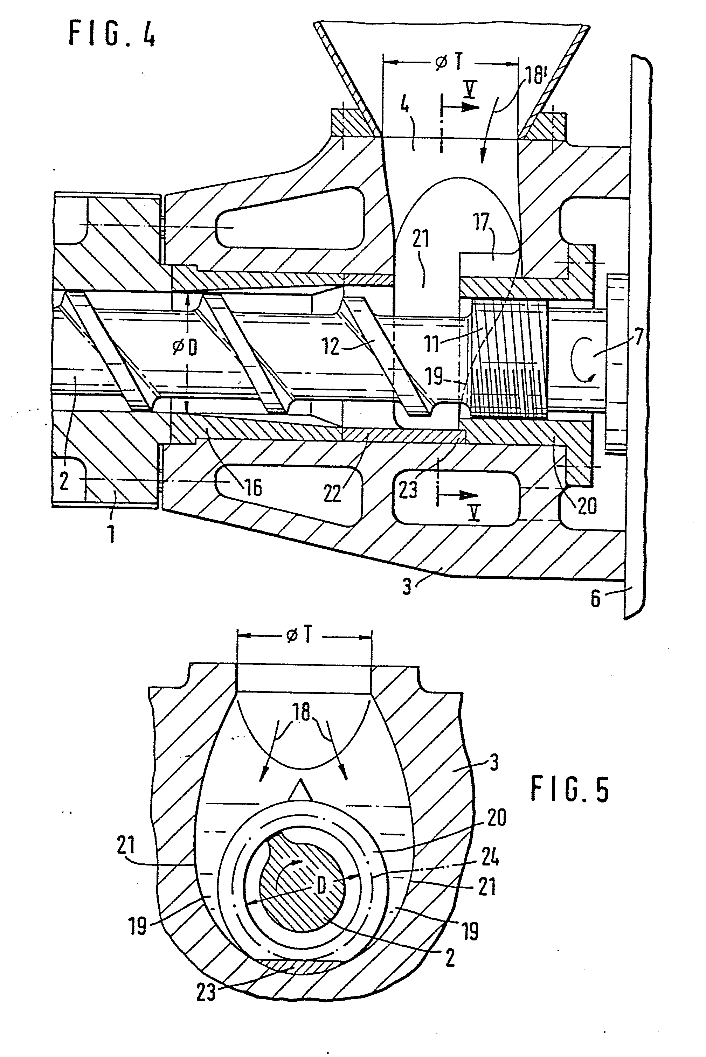

Fig. 4    einen vertikalen Längsschnitt durch eine
          zweite Ausführungsform eines Trichterstücks
          einer Einschneckenstrangpresse,

Fig. 5    einen Schnitt durch das Trichterstück nach
          Fig. 4 längs der Linie V - V,

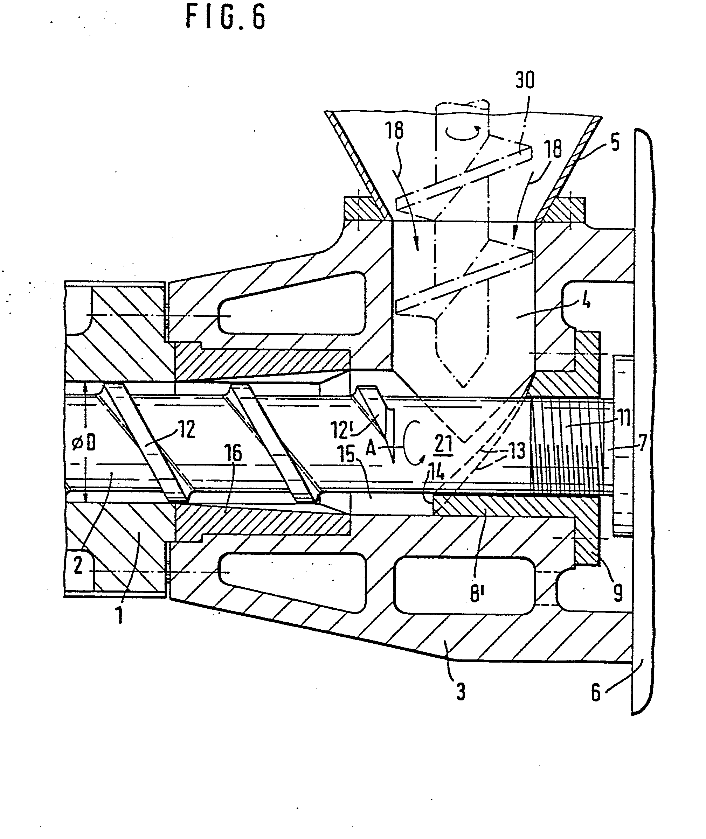

Fig. 6    einen vertikalen Längsschnitt durch eine dritte
          Ausführungsform eines Trichterstücks einer
          Einschneckenstrangpresse,

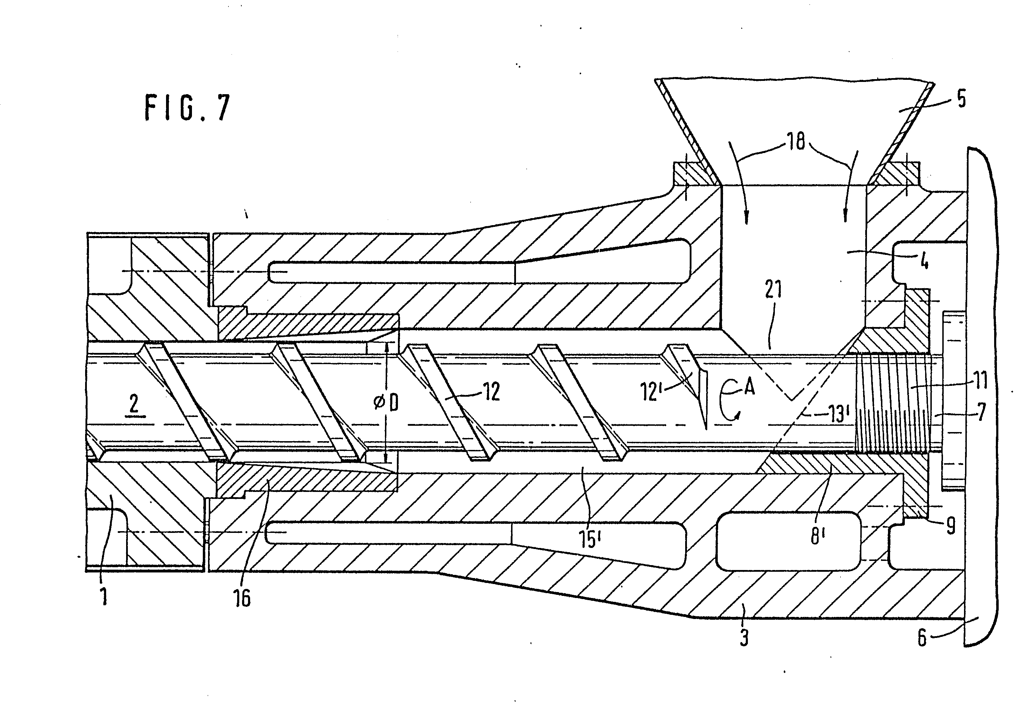

Fig. 7    einen vertikalen Längsschnitt durch eine vierte
          Ausführungsform eines Trichterstücks mit verlängerter Einzugstasche,

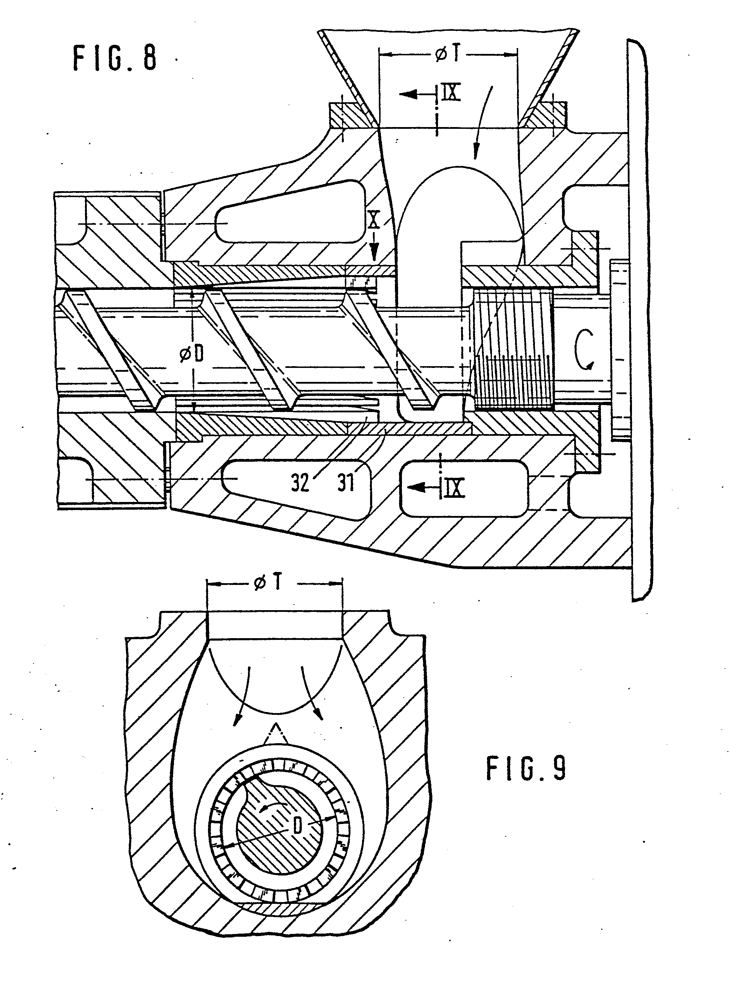

Fig. 8    einen vertikalen Längsschnitt durch eine weitere
          Ausführungsform eines Trichterstücks einer
          Einschneckenstrangpresse,

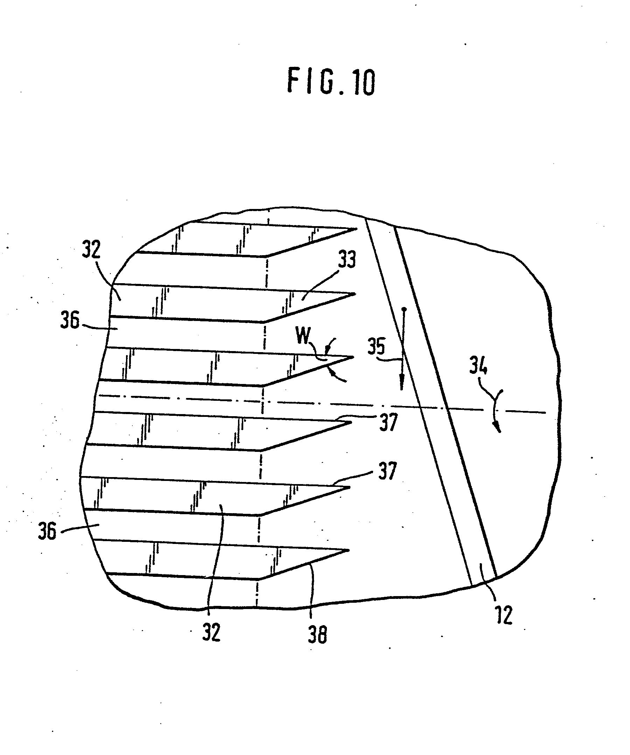

Fig. 9    einen Querschnitt durch das Trichterstück nach
          Fig. 8 längs der Linie IX - IX und

Fig. 10   eine Draufsicht auf einen Teil der Abwicklung
          der Einzugstasche und der Nutbüchse in Richtung
          des Pfeils X in Fig. 8.

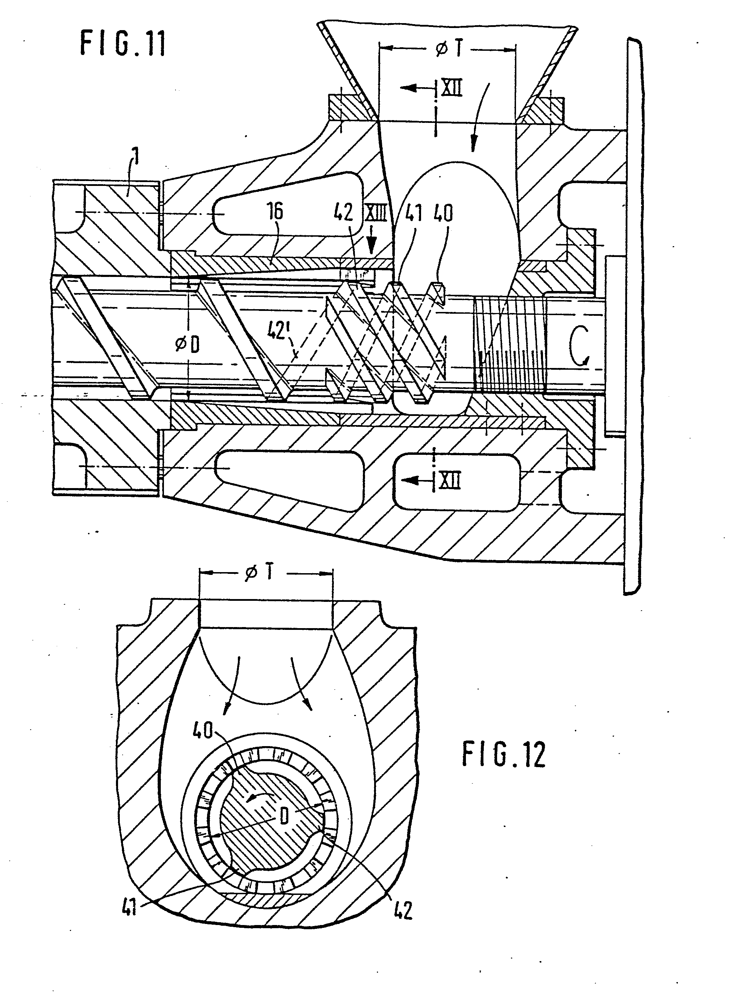

Fig. 11   einen der Fig. 8 entsprechenden vertikalen Längsschnitt durch ein Trichterstück einer Einschneckenstrangpresse mit einer Förderschnecke mit mehrgängigem Einlaufbereich,

Fig. 12   einen Querschnitt durch das Trichterstück nach Fig.
          11 längs der Linie XII - XII und

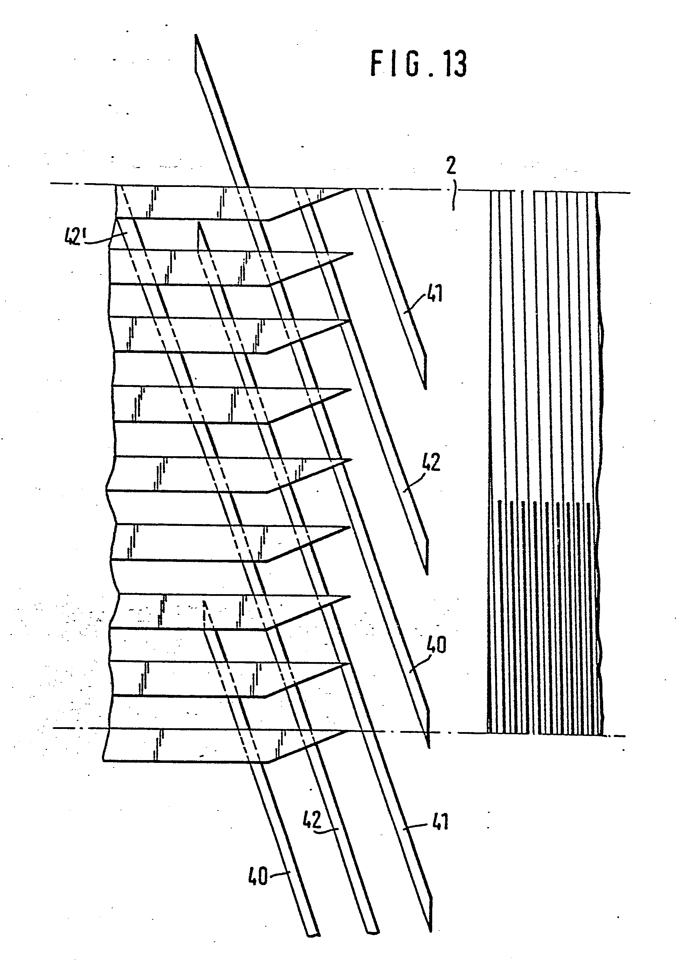

Fig. 13   eine Abwicklung der Einzugstasche der Nutbüchse mit
          einer Abwicklung der diese überstreichenden mehrgängigen Schneckenstege.

In der zylindrischen Bohrung des Gehäuses 1 ist die Förderschnecke 2 gelagert. Mit dem zylindrischen Gehäuse 1 ist das
Gehäuseteil 3 verschraubt, das mit der radialen und vertikal
verlaufenden, die Einfüllöffnung bildenden Zuführungsbohrung
4 versehen ist, auf die der Einfülltrichter 5 aufgesetzt ist.
Mit dem mit der Zuführungsbohrung 4 versehenen Gehäuseteil 3
ist das Getriebe 6 verbunden, dessen Ausgangswelle mit dem
Schaft 7 der Förderschnecke 2 verbunden ist und diese in
Richtung des Pfeils A antreibt.

In die axiale Bohrung des Gehäuseteils 3 ist das buchsenförmige Umlenkstück 8 eingesetzt, dessen flanschförmiger Rand 9
mit dem Gehäuseteil 3 verschraubt ist. In das Umlenkstück 8
ist drehfest das eine Buchse bildende Rohrstück 10 mit geringer
Wandstärke eingesetzt. Das buchsenförmige Rohrstück 10 faßt
das Rückfördergewinde 11 der Förderschnecke 2 und überdeckt
dies bis zum Anfang des Förderstegs 12 der Förderschnecke 2.
Das Umlenkstück 8 ist mit umlenkenden Leitflächen 13 versehen,
die am besten aus Fig. 3 ersichtlich sind. Die Leitflächen 13
sind durch einen aus Fig. 1 ersichtlichen, schwach gekrümmten
Schnitt durch das buchsenförmige Umlenkstück 8 gebildet und
bestehen aus einer etwa elliptischen Stirnfläche des Umlenkstücks 8. Der Scheitel dieser elliptischen Stirnfläche befindet
sich am hinteren Ende der Zuführungsbohrung 4 und weist eine
etwa senkrecht auslaufende Fläche auf. Die Leitflächen 13
sind in Richtung auf den unteren Scheitel zunehmend nach
außen hin geneigt, so daß die Stirnflächen in der Schneide
14 sich treffen.

Das buchsenförmige Rohrstück 10 endet kurz vor dem vorderen
Ende der Zuführungsbohrung 4. Im Anschluß an die Zuführungsbohrung 4 ist in die axiale Bohrung des Gehäuseteils 3 die aus einem ringförmigen Teil bestehende Einzugstasche 15 eingesetzt. Der Innendurchmesser der Einzugstasche 15 ist größer als der Außendurchmesser der Förderschnecke 2. Die Einzugstasche 15 weist einen innenkonusförmigen oder trichterförmigen Einlauf auf.

In Förderrichtung vor der Einzugstasche 15 ist die Nutbüchse 16 angeordnet, die mit axial verlaufenden Stegen versehen ist, die zwischen sich in Förderrichtung in ihrer Tiefe zunehmend abnehmende Nuten aufweisen. Die Stege sind in Richtung auf die Einzugstasche 15 keilförmig abgeschrägt.

Auf das buchsenförmige Rohrstück 10 ist im Bereich der Zuführungsbohrung 4 ein schneidenförmiges Verteilungsstück 17 aufgesetzt.

Die aus einem Granulat oder Pulver bestehenden thermoplastischen Massen werden in Richtung der Pfeile 18 eingezogen und kontinuierlich durch die Leitflächen 13 in Förderrichtung der Förderschnecke umgelenkt.

Bei dem Ausführungsbeispiel nach den Fig. 4 und 5 sind die Leitflächen 19 durch die Stirnflächen eines stufenförmigen Absatzes in dem Gehäuseteil 3 selbst gebildet. Die die Stufe bildenden Stirnflächen weisen, wie aus Fig. 4 ersichtlich ist, in Seitenansicht einen etwa S-förmigen Verlauf auf.

In die axiale Bohrung des Gehäuseteils 3 ist die Buchse 20 gehäusefest eingesetzt, die das Rückfördergewinde 11 und den Beginn der Schneckenstege 12 überdeckt. Die Vorderkante des unteren Teils der Buchse 20 ist etwa bündig mit dem unteren Teil der Leitflächen 19. Durch die die Leitflächen 19 bildende Stufe ist in dem Gehäuseteil 3 unterhalb der Zuführungsbohrung 4 ein sich etwa tropfenartig erweiternder Einzugsraum 21 gebildet.

Die Einzugstasche 22 weist einen unteren Fortsatz 23 auf, in dessen ebene Oberfläche die Leitflächen 19 münden. Der Abstand der ebenen Oberfläche des Fortsatzes 23 zum Außendurchmesser der Schnecke entspricht dem Abstand der Innenwandung der Einzugstasche 22 zum Schneckenaußendurchmesser. Der Innendurchmesser 24 der Einzugstasche 22 ist in Fig. 5 strichpunktiert eingezeichnet.

Bei der Ausführungsform nach Fig. 6 ist in die axiale Bohrung des Gehäuseteils 3 das buchsenförmige Umlenkstück 8' eingesetzt, dessen flanschförmiger Rand 9 mit dem Gehäuseteil 3 verschraubt ist. Das buchsenförmige Umlenkstück 8' faßt das Rückfördergewinde 11 der Förderschnecke 2 dichtend ein und überdeckt dies vollständig. Die Durchmesser des Schafts 7 und des Kerns der Förderschnecke 2 sind gleich und entsprechen dem Außendurchmesser des Rückfördergewindes 11.

Das Umlenkstück 8' ist bei der Ausführungsform nach Fig. 6 mit umlenkenden Leitflächen 13 versehen, die bei der Ausführungsform nach Fig. 1 in Seitenansicht einen schwach gekrümmten Verlauf aufweisen, so daß sie eine elliptische Form besitzen. Der Scheitel dieser durch die Stirnfläche des buchsenförmigen Umlenkstücks 8' gebildeten elliptischen Leitflächen befindet sich am hinteren Ende der Zuführungsbohrung 4 und weist eine etwa senkrecht auslaufende Fläche auf. Die Leitflächen 13 sind in Richtung auf den unteren Scheitel zunehmen nach außen hin geneigt, so daß die Stirnflächen sich in der Schneide 14 treffen. Die Schneide 14 liegt vor dem vorderen Ende der Zuführungsbohrung 4 oder in deren Bereich.

0071159

Der Kern der Schnecke 2 weist im Bereich der Zuführungsbohrung 4 keine Stege auf. Der Anfang 12' des Schneckenstegs 12 befindet sich im Bereich des vorderen Endes der Zuführungsbohrung 4.

Der durch die Hüllkurve der Schneckenstege definierte Außendurchmesser der Förderschnecke 2 weist von der axialen Gehäusebohrung in dem Gehäuseteil 3 im Anschluß an die Zuführungsbohrung 4 einen radialen Abstand auf, der größer ist als die Körnung des größten zu verarbeitenden Granulats. Der Durchmesser der Gehäusebohrung ist in diesem Bereich also um mehr als das Doppelte der Körnung des größten zu verarbeitenden Materials größer als der Durchmesser der Förderschnecke. Durch diesen zwischen der Förderschnecke und der Wandung der Gehäusebohrung gebildeten Ringraum ist eine sogenannte Einzugstasche 15 geschaffen, deren Länge etwa der Hälfte des Schneckendurchmessers entspricht.

In Förderrichtung vor der Einzugstasche 15 ist die Nutbüchse 16 angeordnet, die mit axial verlaufenden Stegen versehen ist, die zwischen sich in ihrer Förderrichtung in ihrer Tiefe zunehmend abnehmende Nuten aufweisen. Die Stege sind in Richtung auf die Einzugstasche 15 keilförmig abgeschrägt.

Bei dem Ausführungsbeispiel nach Fig. 6 ist in der Zuführungsbohrung eine Stopfschnecke 30 angeordnet, die den hydrostatischen Druck des Granulatstroms 18 erhöht. Da durch die Stopfschnecke 30 ein relativ hoher hydrostatischer Druck in dem eingezogenen Granulat erzeugt werden kann, kann die axiale Länge der Einzugstasche 15 relativ kurz gehalten werden.

Das Ausführungsbeispiel nach Fig. 7 unterscheidet sich von
dem nach Fig. 6 in erster Linie dadurch, daß in der Zuführungsbohrung 4 keine Stopfschnecke angeordnet ist, so daß sich der
hydrostatische Druck des Granulatstroms 18 aus der Schwerkraft
ergibt. Bei dieser Ausführungsform ist die Einzugstasche 15'
größer als ein Schneckendurchmesser, vorzugsweise etwa zwei
bis drei Schneckendurchmesser groß, so daß der hydrostatische
Druck in dem Granulatstrom vergrößert wird.

Weiterhin ist bei der Ausführungsform nach Fig. 2 das buchsenförmige Umlenkstück 8' an seiner Stirnseite mit einer schrägen
Planfläche 13' versehen, die die Einzugsleitflächen bildet.
Die schräge Planfläche 13' läßt sich in einfacher Weise durch
Fräsen herstellen.

Bei der Ausführungsform des Trichterstücks nach Fig. 8 ragen
die Stege 32 der Nutbüchse mit ihren keilförmig spitz zulaufenden hinteren Enden in die Einzugstasche 31 hinein. In Fig. 10
ist die Drehrichtung der Förderschnecke mit dem Fördergang 12
durch den Drehpfeil 34 angedeutet. Die Umfangsgeschwindigkeitskomponente des Schneckengangs 12 ist zusätzlich durch den
Bewegungspfeil 35 angezeigt.

Die Anzahl der Nuten 36 entspricht der Anzahl der Millimeter,
die sich durch Teilung des Schneckendurchmessers durch 5 ergeben (Nutanzahl ≙ D/5). Bei einem Extruder E90 werden beispielsweise also bis zu 18 Nuten vorgesehen. Hierdurch sind die
Breiten der Nuten 36 etwa gleich breit wie die dazwischenliegenden Längsstege 32 der Nutbüchse.

Die Schubflanke 37 des Einlaufs in die Nuten 36 wird mit
stoßfreiem Übergang ausgeführt. Hingegen ist die Rückflanke
38 abgeschrägt und bildet vorzugsweise mit der Schubflanke 37 einen Winkel W von etwa 15 - 30 .

Durch diese sägezahnartig in die Einzugstasche hineinreichenden
Enden der Stege der Nutbüchse wird die Ausstoßleistung der
Schnecke pro Umdrehung gesteigert, ohne daß dadurch der stoßfreie
Einzug bei gleichmäßigem Drehmomentverlauf verlorengeht.

Die Ausführungsform nach den Fig. 11 bis 13 unterscheidet sich
von der Ausführungsform nach den Fig. 8 bis 10 im wesentlichen
dadurch, daß die Förderschnecke mit drei im gleichmäßigen Abstand
über den Umfang verteilten Schneckenstegen 40, 41, 42 versehen
ist, die auf dem zunächst steglosen Schneckenkern im mittleren
Bereich der Einfüllöffnung beginnen und im Bereich der Stege der
Nutbüchse 16 auslaufen. Zweckmäßigerweise erstrecken sich jedoch
die mehrgängigen Schneckenstege über den gesamten Bereich der
Nutbüchse und die Mehrgängigkeit endet im Einlaufbereich der
glatten zylindrischen Bohrung in dem Gehäuse 1. Nur einer der
Stege, nämlich der Steg 42, ist über den mehrgängigen Bereich
der Förderschnecke fortgesetzt, wobei der fortgeführte Schneckengang 42' gegenüber dem mehrgängigen Bereich verbreitert ist.

Windmöller & Hölscher,
4540 Lengerich

---

Trichterstück einer Einschneckenstrangpresse

---

P a t e n t a n s p r ü c h e :

1. Trichterstück einer Einschneckenstrangpresse mit einer
in einem Gehäuse gelagerten Förderschnecke, die zur
antreibenden Getriebewelle hin durch ein von einer
gehäusefesten Buchse abgedecktes Rückfördergewinde
abgedichtet ist, mit einer radial zur Förderschnecke
angeordneten Einfüllöffnung in dem Gehäuse und einer
durch einen zwischen dem Hüllzylinder der Förderschnecke
und der Gehäusebohrung befindlichen Ringraum gebildeten,
in Förderrichtung an die Einfüllöffnung anschließenden
Einzugstasche, dadurch  g e k e n n z e i c h n e t ,
daß die das Rückfördergewinde (11) abdeckende Buchse
(10, 20) die Einfüllöffnung (4) zumindest teilweise
durchsetzt und ein die Buchse (10, 20) umgebender ringförmiger Einzugsraum (21) vorgesehen ist, der auf seiner Rückseite durch eine elliptische oder geneigte Leitflächen (13, 19) bildende Stirnfläche geschlossen ist,
deren oberer Scheitel oder oberer Bereich sich im Bereich
der oberen Mantellinie der Buchse (10, 20) an der hinteren
Seite der Einfüllöffnung (4) befindet und deren unterer
Scheitel oder unterer Bereich im Bereich der unteren
Mantellinie der Buchse (10, 20) liegt.

2. Trichterstück nach Anspruch 1, dadurch gekennzeichnet,
daß das Rückfördergewinde (11) im Bereich der Einfüllöffnung (4) angeordnet ist.

3. Trichterstück nach Anspruch 1 oder 2, dadurch gekennzeichnet, daß die Buchse (10, 20) den Anfangsteil des
Schneckensteges (12) überdeckt und ausgehend von dem
hinteren Ende der Einfüllöffnung (4) eine Länge von
0,5 - 0,9 des Durchmessers (T) der Einfüllöffnung in
axialer Richtung der Förderschnecke (2) aufweist.

4. Trichterstück nach einem der Ansprüche 1 bis 3, dadurch
gekennzeichnet, daß die Buchse (10) dünnwandig ausgebildet ist und in einem in das Gehäuse (3) eingesetzten
Rohrstück (8) gehaltert ist, dessen Stirnflächen die
Leitflächen (13) bilden.

5. Trichterstück nach einem der Ansprüche 1 bis 4, dadurch
gekennzeichnet, daß die Leitflächen (13) in Seitenansicht
durch eine schwach gekrümmte Linie begrenzt sind, deren
konvexe Scheitel entgegen der Förderrichtung weisen.

6. Trichterstück nach einem der Ansprüche 1 bis 4, dadurch gekennzeichnet, daß die Leitflächen (19) in Seitenansicht durch eine S-förmige Linie begrenzt sind.

7. Trichterstück nach einem der Ansprüche 1 bis 6, dadurch gekennzeichnet, daß die Leitflächen (13) ausgehend von ihrem oberen Scheitel zunehmend derart jeweils nach außen geneigt sind, daß sie sich in dem unteren Scheitel in einer in der senkrechten Mittelebene liegenden Schneide (14) treffen.

8. Trichterstück nach einem der Ansprüche 1 bis 7, dadurch gekennzeichnet, daß auf die Buchse (10, 20) im Bereich von deren oberer Mantellinie eine den Strom der eingefüllten thermoplastischen Massen teilende Schneide (17) aufgesetzt ist.

9. Trichterstück nach einem der Ansprüche 1 bis 8, dadurch gekennzeichnet, daß die sich an die Einfüllöffnung (4) anschließende Einzugstasche (15, 22) eine axiale Länge von mindestens 0,5 - 1,0 des Durchmessers (D) der Förderschnecke (2) aufweist.

10. Trichterstück nach einem der Ansprüche 1 bis 9, dadurch gekennzeichnet, daß an die Einzugstasche (15, 22) eine Nutbüchse (16) mit regelmäßig über den Umfang verteilten, konisch auslaufenden Nuten mit einer axialen Länge von 1,5 bis 3,0 des Durchmessers (D) der Förderschnecke (2) anschließt.

11. Trichterstück nach Anspruch 1, dadurch gekennzeichnet, daß die Leitflächen (19) durch stufenförmige Ränder der Einfüllöffnung (4) bzw. des diese fortsetzenden Einzugsraums (21) gebildet sind.

12. Trichterstück nach einem der Ansprüche 1 bis 11, dadurch gekennzeichnet, daß sich der unterhalb der Einfüllöffnung befindliche Einzugsraum (21) etwa tropfenförmig erweitert.

13. Trichterstück nach Anspruch 11 oder 12, dadurch gekennzeichnet, daß der Einzugsraum (21) an seinem unteren Ende durch einen Fortsatz (23) der rohrstückförmigen Einzugstasche (22) begrenzt ist, der durch einen bis auf die untere Mantellinie der Innenwandung der Einzugstasche (22) geführten Radialschnitt und einen an diesen rechtwinkelig anschließenden Horizontalschnitt gebildet ist.

14.. Trichterstück nach einem der Ansprüche 1 bis 13, dadurch gekennzeichnet, daß die die Buchsen (10, 20) umgebenden Leitflächen (13, 19) im Bereich der unteren Mantellinien der Buchsen auslaufen.

15. Trichterstück nach Anspruch 1, dadurch gekennzeichnet, daß der Schneckenschaft im Bereich der Einfüllöffnung (4) keinen Schneckensteg trägt.

16. Trichterstück nach Anspruch 15, dadurch gekennzeichnet, daß der Anfang (12') des Schneckenstegs (12) hinter dem vorderen Ende der Einfüllöffnung (4) beginnt.

17. Trichterstück nach Anspruch 15 oder 16, dadurch gekennzeichnet, daß der Außendurchmesser des Schneckenschafts
(7) dem Durchmesser des Kerns der Förderschnecke (2)
entspricht.

18. Trichterstück nach einem der Ansprüche 15 bis 17, dadurch
gekennzeichnet, daß der Außendurchmesser des Rückfördergewindes (11) dem Durchmesser des Kerns der Förderschnecke
(2) entspricht.

19. Trichterstück nach einem der Ansprüche 15 bis 18, dadurch
gekennzeichnet, daß die Buchse (8') querspritzkopfähnlich
als Umlenkstück ausgebildet und mit den den Einzugsraum
(21) begrenzenden Leitflächen (13, 13') versehen ist und
im Bereich der Einfüllöffnung (4) den Schneckenschaft (7)
einfaßt.

20. Trichterstück nach einem der Ansprüche 15 bis 19, dadurch
gekennzeichnet, daß die Einzugstasche (15, 15') durch
die an die Einfüllöffnung (4) anschließende Bohrung des
Trichterstücks gebildet ist und der Durchmesser der
Bohrung um mehr als die doppelte Korngröße des größten
zu verarbeitenden Granulats größer ist als der Außendurchmesser der Förderschnecke (2).

21. Trichterstück nach einem der Ansprüche 15 bis 20, dadurch
gekennzeichnet, daß die axiale Länge der Einzugstasche
(15') größer als ein Schneckendurchmesser ist.

22. Trichterstück nach Anspruch 21, dadurch gekennzeichnet, daß die axiale Länge der Einzugstasche (15') dem Zwei- bis Dreifachen des Schneckendurchmessers (D) entspricht.

23. Trichterstück nach einem der Ansprüche 15 bis 20, dadurch gekennzeichnet, daß in der Einfüllöffnung (4) eine Stopfschnecke (16) angeordnet ist.

24. Trichterstück nach Anspruch 23, dadurch gekennzeichnet, daß die axiale Länge der Einzugstasche (15) ab dem vorderen Ende der Einfüllöffnung 0,5 bis zu einem Ganzen des Schneckendurchmessers (D) beträgt.

25. Trichterstück nach einem der Ansprüche 15 bis 24, dadurch gekennzeichnet, daß die Leitflächen (13') der Buchse (8') durch eine schräge Planfläche gebildet sind.

26. Trichterstück nach Anspruch 10, dadurch gekennzeichnet, daß die die Nuten (36) der Nutbüchse trennenden Stege (32) entgegen der Förderrichtung bis in die Einzugstasche (31) ragen und in Draufsicht eine sägezahnartige Form aufweisen.

27. Trichterstück nach Anspruch 26, dadurch gekennzeichnet, daß nur die in Drehrichtung hinteren Flanken (38) der Stege (32) zur Bildung der keilförmig erweiterten Einlaufbereiche der Nuten (36) relativ zur Schneckenachse abgeschrägt sind.

28. Trichterstück nach Anspruch 26 oder 27, dadurch gekennzeichnet, daß die abgeschrägten Flanken (38) der Stege (32) mit deren axial verlaufenden Flanken (37) einen Winkel von etwa 15 bis 30° einschließen.

29. Trichterstück nach einem der Ansprüche 26 bis 28, dadurch gekennzeichnet, daß die Stege (32) mit ihren sich keilförmig verjüngenden Einlaufbereichen etwa die Hälfte bis zwei Drittel der Länge der Einzugstasche (31) durchsetzen.

30. Trichterstück nach einem der Ansprüche 26 bis 29, dadurch gekennzeichnet, daß die Anzahl der Nuten (36) etwa der Zahl entspricht, die sich aus der Division des Schneckendurchmessers durch 5 in Millimetern ergibt.

31. Trichterstück nach einem der vorhergehenden Ansprüche, dadurch gekennzeichnet, daß die Förderschnecke mit mindestens drei im Bereich der Einfüllöffnung beginnenden Schneckenstegen (40, 41, 42) versehen ist, von denen nur einer über die Nutbüchse (16) hinaus fortgeführt ist.

32. Trichterstück nach Anspruch 31, dadurch gekennzeichnet, daß die Förderschnecke über den gesamten Bereich der Nutbüchse (16) mehrgängig ausgebildet ist.

33. Trichterstück nach Anspruch 31 oder 32, dadurch gekennzeichnet, daß zur Kompensation des Stegvolumens die Breite der Schneckenstege (40, 41, 42) in dem mehrgängigen Bereich der Schnecke geringer ist als in dem eingängigen Bereich.

34. Trichterstück nach einem der Ansprüche 31 bis 33, dadurch gekennzeichnet, daß die Steigung der Schneckenstege im Bereich der Mehrgängigkeit größer ist als in dem anschließenden einstegigem Bereich.

FIG. 1

FIG. 2

FIG.3

FIG. 4

FIG. 5

## FIG.6

FIG. 7

FIG.8

FIG.9

FIG.10

FIG.11

FIG.12

0071159

FIG.13

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-C-1 007 499 (WERNER & PFLEIDERER) *Spalte 2, Zeilen 29-33; Spalte 2, Zeile 47 bis Spalte 3, Zeile 3; Figuren 1,2* | 8 | B 29 F 3/02 |
| | --- | | |
| A | FR-A-2 399 311 (BUCHER-GUYER AG) *Seite 3, Zeile 36 bis Seite 4, Zeile 4; Figur 1* | 9,13 | |
| | --- | | |
| A | US-A-3 850 415 (G.HANSEN) *Spalte 2, Zeilen 26-48; Figur 1* | 10 | |
| | --- | | |
| A | GB-A-1 380 082 (K.R.MATTHEWS & COMPANY LTD.) *Anspruch 1; Figuren* | 23 | |

|  |  |  | RECHERCHIERTE SACHGEBIETE (Int. Cl. 3) |
|---|---|---|---|
| A | US-A-2 770 837 (H.REIFENHAUSER) *Spalte 2, Zeilen 5-24; Figuren 1,2* | | B 29 B 5/04 B 29 F 3/02 |

----

Der vorliegende Recherchenbericht wurde für alle Patentansprüche erstellt.

| Recherchenort | Abschlußdatum der Recherche | Prüfer |
|---|---|---|
| DEN HAAG | 08-09-1982 | E. BRUCK |